# EUROPÄISCHE PATENTSCHRIFT

(11) **EP 2 300 218 B1**
(45) Veröffentlichungstag und Bekanntmachung des Hinweises auf die Patenterteilung: **27.07.2016**
(21) Anmeldenummer: 09780109.6
(22) Anmeldetag: 02.07.2009
(51) Int. Cl.: B29C 67/00, B22F 3/105, A61C 13/00, G05B 19/00

(54) **DUALES HERSTELLUNGSVERFAHREN FÜR KLEINSERIENPRODUKTE**
DUAL METHOD FOR THE SMALL-SCALE MANUFACTURE OF PRODUCTS
PROCÉDÉ MIXTE DE FABRICATION POUR PRODUITS EN PETITES SÉRIES

(30) Priorität: 08.07.2008 DE 102008031925
(43) Veröffentlichungstag der Anmeldung: 30.03.2011
(73) Patentinhaber: BEGO Medical GmbH, 28359 Bremen (DE)
(72) Erfinder: VAGT, Carsten, 28876 Oyten (DE); WEHNING, Ralf, 28879 Grasberg (DE)
(74) Vertreter: Eisenführ Speiser
(86) Internationale Anmeldenummer: PCT/EP2009/058367
(87) Internationale Veröffentlichungsnummer: WO 2010/003882

(56) Entgegenhaltungen:
- EP-A1- 1 974 688
- EP-A2- 1 348 506
- EP-A2- 1 464 298
- WO-A1-2004/004955

## Beschreibung

Die Erfindung betrifft ein Verfahren zum Herstellen von Produkten mittels zumindest teilweise schichtweisen Aufbaus, insbesondere durch selektives Laserschmelzen, umfassend die Schritte:
(a) Bereitstellen einer Basisplatte,
(b) Auftragen einer Schicht eines aushärtbaren Materials,
(c) selektives Aushärten von vorbestimmten Bereichen der aufgetragenen Schicht anhand geometrischer Daten des Produkts,
(d) Wiederholen der Schritte (b) und (c) bis die Geometrie eines ersten Teilvolumens des Produkts als ausgehärtetes Material erstellt wurde,
(e) Entfernen des nicht ausgehärteten Materials.

Weiterhin betrifft die Erfindung eine Vorrichtung zum Herstellen von Produkten durch schichtweisen Aufbau, umfassend Mittel zum Auftragen einer Schicht eines aushärtbaren Materials auf eine Basisplatte und Mittel zum selektiven Aushärten von vorbestimmten Bereichen der aufgetragenen Schicht anhand geometrischer Daten der Produkte.

Verfahren und Vorrichtungen zum Herstellen von Produkten durch schichtweisen Aufbau sind beispielsweise durch DE 299 24 924 U1, EP 1 021 997 B1, DE 102 19 983 B4, DE 103 20 085 A1, EP 1 464 298 B1, WO 2005/080029 A1, EP 1 568 472 B1 und DE 10 2005 050 665 A1 bekannt. Verfahren der eingangs genannten Art ermöglichen eine effiziente Herstellung geometrisch komplexer Produkte. Bekannt sind Verfahren der eingangs genannten Art beispielsweise aus dem "Rapid Prototyping", bei dem aus Produktgeometriedaten, welche die dreidimensionale Form des Produkts beschreiben, direkt ein Produktmodell hergestellt wird, welches der Anschauung und Erprobung dienen kann.

US 2003/ 00 94 259 A1 offenbart ein Verfahren und eine Vorrichtung zur Herstellung von hochfesten Metallstrukturen, bei dem auf einer Auflageplatte eine Struktur schichtweise aufgebaut wird, indem ein Metalldraht durch einen Elektronen- oder Laserstrahl aufgeschmolzen wird.

In DE 198 53 978 C1 ist eine Vorrichtung für das selektive Laser-Schmelzen zur Herstellung eines Formkörpers mit einer Schleifeinrichtung gezeigt, mit der die Bearbeitungsfläche des im Aufbauvolumen befindlichen Formkörpers geglättet werden kann.

Aus EP 0 734 842 B2 sind eine Vorrichtung und ein Verfahren zum Herstellen eines dreidimensionalen Objekts durch aufeinanderfolgendes Verfestigen von Schichten durch Sintern eines pulverförmigen Aufbaumaterials bekannt. Dabei dient eine vorgefertigte Platte aus verfestigtem Aufbaumaterial als Sockel für das zu bildende Objekt.

DE 195 33 960 C2 offenbart ein Verfahren und eine Vorrichtung zur Herstellung von metallischen Werkstücken, wobei mit einem Laserstrahl metallhaltiges Pulver schichtweise aufgeschmolzen wird und aufgebrachte Schichten mit Feinfräs- oder Schleifwerkzeugen spanend nachbearbeitet werden.

DE 101 24 795 A1 zeigt ein Verfahren und eine Vorrichtung zur Herstellung eines Werkstücks durch aufeinanderfolgendes Verfestigen von schichtweise horizontal aufgetragenem pulverförmigen Ausgangsmaterial, wobei nach dem Fertigstellen einer gewissen Anzahl von Schichten eine mechanische Feinbearbeitung erfolgt.

In DE 199 05 067 A1 ist eine Vorrichtung zur Herstellung eines Formköpers durch schichtweises Aufbauen aus pulverförmigem Werkstoff mit einem Träger für den Schichtaufbau offenbart, bei der auf der zuletzt bestrahlten Schicht Unebenheiten zumindest teilweise mittels einer Schleifvorrichtung abgeschliffen werden.

DE 11 2006 001 961 T5 zeigt eine Vorrichtung zum Bilden eines geschichteten Objekts, wobei eine dreidimensionale Struktur auf einer Basis gebildet und anschließend von der Basis entfernt wird.

Aus Wilhelm Meiners: Direktes Selektives Laser Sintern einkomponentiger metallischer Werkstoffe, Aachen: Shaker, 1999, S. 107 - 111, ISBN 3-8265-6571-1 ist bekannt, beim direkten selektiven Lasersintern eine erste Schicht auf eine Substratplatte aufzubauen und das Material der ersten Schicht schmelzmetallurgisch mit der Substratplatte zu verbinden, so dass die Substratplatte als Teil des Bauteils genutzt werden kann.

Verfahren der eingangs genannten Art können beispielsweise mit einem pulverförmigen oder in anderer Weise schüttfähigen Material durchgeführt werden, welches durch eine chemische Vernetzungsreaktion oder einen physikalischen Verbindungsvorgang, beispielsweise eine Verschmelzung oder Sinterung, ausgehärtet werden kann und auf diese Weise eine belastbare, dreidimensionale Struktur erzeugen kann. Bevorzugte Verfahren sind beispielsweise das selektive Lasersintern (selective laser sintering, SLS) oder das selektive Laserschmelzen (selective laser melting, SLM). In anderen Anwendungsfällen wird auch ein flüssiges, aushärtbares Material verwendet, das beispielsweise durch Photopolymerisation mittels eines Laserstrahls selektiv ausgehärtet werden kann. Für in der Dentaltechnik einzusetzende Produkte wird bevorzugt das Verfahren des selektiven Laserschmelzens (selective laser melting, SLM) zum schichtweisen Aufbau eingesetzt.

Bei den eingangs genannten Verfahren ist das herzustellende Produkt regelmäßig von der Basisplatte beabstandet und über eine Hilfskonstruktion, einen sogenannten Aufbausteg, mit der Basisplatte verbunden, um ein späteres Ablösen des Produkts zu erleichtern. Dieser Aufbausteg wird vor dem Herstellen des eigentlichen Produkts selbst durch schichtweises Aushärten des Ausgangsmaterials hergestellt. Dazu sind zunächst Geometrie und Lageanordnung des Aufbaustegs im Verhältnis zum herzustellenden Produkt zu ermitteln. Nach der Herstellung des Produkts ist das Produkt von der Basisplatte und vom Aufbausteg zu trennen. Dies erfolgt meist über die Ausbildung von Sollbruchstellen im Aufbausteg zur Basisplatte und zum Produkt hin. Je nach Geometrie des herzustellenden Produkts können weitere, dem Aufbausteg vergleichbare Stützen erforderlich sein, um das Produkt während der Herstellung abzustützen. Hierzu müssen diese Stützen zunächst berechnet und hergestellt werden, anschließend entfernt und entsorgt werden. Die eingangs genannten Verfahren können daher in Bezug auf Fertigungszeit, Fertigungskosten und Produktqualität weiter verbessert werden.

Aus EP 1 464 298 B1 ist bekannt, dass zur Herstellung von Implantataufbauten auf einen vorgefertigten Grundkörper in Pulverform vorliegendes Material mittels Lasersintern und/oder Laserschmelzen schichtweise aufgesintert bzw. aufgeschmolzen wird, um einen mit dem Grundkörper verbundenen Hauptkörper zu bilden. Damit wird erreicht, dass auf vorgefertigte, standardisierte Grundkörper individuelle Hauptkörper aufgebaut werden können. Die Verwendung vorgefertigter, standardisierter Grundköper ist jedoch nur bei hohen Stückzahlen effizient. Weiterhin setzt diese Lösung Dentalteile voraus, die einen vorgefertigten Grundkörper aufweisen.

Aus Meiners, Wilhelm: "Direktes Selektives Laser Sintern ein-komponentiger metallischer Werkstoffe", Auszug Seiten 107-111, ist bekannt, beim direkten Selektiven Laser Sintern die erste Schicht auszuhärtenden Materials schmelzmetallurgisch mit der Substratplatte zu verbinden, wobei aufgrund dieser festen Verbindung die Substratplatte als Teil des Bauteils genutzt werden kann, falls die Geometrie des Bauteils dies erlaubt. Ziel ist es, die Bauzeit zu verkürzen. Auch diese Lösung weist den Nachteil auf, dass sie nur für Produkte in Frage kommt, deren Geometrie einen plattenartigen Grundkörper vorsieht, der durch eine vorgefertigte Substratplatte gebildet werden kann.

EP 0 734 842 B2 offenbart ein Verfahren zum Herstellen eines dreidimensionalen Objektes, bei dem das Objekt auf eine vorgesinterte Platte aus demselben Aufbaumaterial wie das Objekt aufgebaut wird. Nach dem Aufbauprozess wird das Objekt mit einer Säge von der Platte abgetrennt und nachbearbeitet. Falls das Objekt eine ebene Grundfläche aufweist, kann alternativ die vorgesinterte Platte zu einem Bestandteil des gesinterten Objekts werden. Die Platte wird mit einer Stichsäge auf das richtige Maß zurechtgesägt und ist für einen neuen Bauprozess verloren. Der damit verbundene hohen Materialeinsatz wirkt sich nachteilig auf die Produktionskosten aus. Ein weiterer Nachteil ist, dass sich auch dieser Ansatz nur für Produkte mit Geometrien eignet, die durch die Basisplatte abbildbar sind, d.h. die zumindest eine ebene Grundfläche aufweisen. Komplexe Geometrien, wie sie individuell angepasste Dentalteile häufig aufweisen, können jedoch durch die bekannten Verfahren, die eine Einbeziehung der Basisplatte in das herzustellende Produkt vorsehen, nicht realisiert werden.

EP 1 464 298 A2 offenbart ein Verfahren zur Herstellung von Implantataufbauten, die einen vorgefertigten Grundkörper zum Verbinden des Implantataufbaus mit dem Dentalimplantat und einen individuell angepassten Hautkörper aufweist. EP 1 464 298 A2 weiter offenbart eine Vorrichtung gemäß dem Oberbegriff des Anspruchs 11.

Der Erfindung liegt daher die Aufgabe zugrunde, ein Verfahren zum Herstellen eines Produkts mittels zumindest teilweise schichtweisen Aufbaus bereitzustellen, mit dem die Produktqualität insbesondere von Produkten mit komplexen Geometrien weiter verbessert werden kann.

Diese Aufgabe wird erfindungsgemäß mit einem Verfahren zum Herstellen von Produkten mittels zumindest teilweise schichtweisen Aufbaus, insbesondere durch selektives Laserschmelzen, gelöst, umfassend die Schritte:
(a) Bereitstellen einer Basisplatte (100) aus dem gleichen Material wie das Produkt,
(b) Auftragen einer Schicht eines aushärtbaren Materials,
(c) selektives Aushärten von vorbestimmten Bereichen der aufgetragenen Schicht anhand geometrischer Daten von zumindest zwei getrennten Produkten,
(d) Wiederholen der Schritte (b) und (c) bis die Geometrie eines jeweils ersten Teilvolumens des jeweiligen Produkts als ausgehärtetes Material erstellt wurde,
(e) Entfernen des nicht ausgehärteten Materials, wobei ein jeweils zweites Teilvolumen jedes Produkts als ein Volumenbereich der Basisplatte ausgebildet wird,
umfassend weiterhin die Schritte:
- Bereitstellen einer Referenzmarkierung,
- Positioniertes Spannen der aus Basisplatte und ersten Volumenbereichen gebildeten Einheit mittels der Referenzmarkierung,
- Freistellen des jeweils zweiten Teilvolumens des jeweiligen Produkts aus der Basisplatte, vorzugsweise durch spanende Bearbeitung, insbesondere CNC-Fräsen.

Die Erfindung sieht vor, den schichtweisen Aufbau der Produkte bzw. eines jeweils ersten Teilvolumens der Produkte auf einer Basisplatte vorzunehmen, die bereits aus dem Material besteht, aus dem die Produkte bzw. jeweils ein Teilvolumen des jeweiligen Produkts durch schichtweisen Aufbau, d.h. schichtweises Auftragen eines aushärtbaren Materials und selektives Aushärten der aufgetragenen Schichten, hergestellt wird. Im ausgehärteten Zustand bestehen demnach die Basisplatte und die durch schichtweisen Aufbau hergestellten Produktgeometrien aus dem gleichen Material.

Auf einer Basisplatte aus dem gleichen Material wie die ausgehärteten Produkte kann der schichtweise Aufbau der Produkte bzw. eines jeweils ersten Teilvolumens der Produkte direkt beginnen, ohne dass eine Beabstandung der Produkte bzw. eines jeweils ersten Teilvolumens der Produkte von der Basisplatte durch einen Aufbausteg o.ä. und den damit verbundenen Nachteilen erforderlich ist. Das auf der Basisplatte durch schichtweisen Aufbau hergestellte jeweils erste Teilvolumen der durch schichtweisen Aufbau auf der Basisplatte hergestellten Produkte ist somit einstückig mit der Basisplatte ausgebildet.

Auf einer gemeinsamen Basisplatte werden die jeweils ersten Teilvolumina mehrerer gleicher oder unterschiedlicher Produkte beabstandet voneinander gleichzeitig oder nacheinander aufgebaut. Am Ende des Verfahrens liegen dann zwei oder mehrere individuelle Produkte vor, die unabhängig voneinander verwendet werden können.

Bei einer Anwendung im Bereich der Dentaltechnik kommen als Materialien sowohl für die Basisplatte als auch für den schichtweisen Aufbau vorzugsweise biokompatible Werkstoffe zum Einsatz.

Erfindungsgemäß wird nur ein jeweils erstes Teilvolumen des jeweiligen Produkts im schichtweisen Aufbau auf der Basisplatte hergestellt und ein jeweils zweites Teilvolumen des jeweiligen Produkts als Teil der Basisplatte definiert. Ein Teilvolumen eines Produkts ist ein dreidimensionaler Abschnitt des Produkts der in Summe mit einem anderen oder mehreren anderen Teilvolumen bzw. -volumina das Produkt bildet. Das zweite Teilvolumen eines Produkts kann ein zusammenhängender Volumenbereich der Basisplatte sein oder aber zwei oder mehrere Volumenbereiche der Basisplatte umfassen. Jeweils ein erstes und zweites Teilvolumen bilden gemeinsam ein einteiliges Produkt. Dieses Produkt ist quasi mit seinem zweiten Teilvolumen in die Basisplatte "abgesenkt".

Das erfindungsgemäße Verfahren umfasst weiterhin den Schritt, die aus Basisplatte und ersten Volumenbereichen gebildeten Einheit mittels einer Referenzmarkierung positioniert zu spannen.

Die Referenzmarkierung kann beispielsweise ein oder mehrere Referenzpunkte oder eine oder mehrere Referenzflächen sein, die dazu dient, vorzugsweise sowohl beim schichtweisen Aufbau des jeweils ersten Teilvolumens der Produkte als auch beim Freistellen des jeweils zweiten Teilvolumens der Produkte aus der Basisplatte, die Lage der Basisplatte und/oder der Produkte im Raum eindeutig zu definieren. Insbesondere beim Freistellen des jeweils zweiten Teilvolumens der Produkte aus der Basisplatte ist es von Bedeutung, dass die Koordinaten der Produkte eindeutig identifizierbar sind, um sicherzustellen, dass das freigestellte jeweils zweite Teilvolumen des jeweiligen Produkts an exakt der vordefinierten Kontur des jeweils ersten Teilvolumens des jeweiligen Produkts anschließt.

Das erfindungsgemäße Verfahren umfasst weiterhin den Schritt, dass das jeweils zweite Teilvolumen des jeweiligen Produkts aus der Basisplatte freigestellt wird. Dabei ist besonders bevorzugt, dass das Freistellen des jeweils zweiten Teilvolumens des jeweiligen Produkts aus der Basisplatte durch spanende Bearbeitung, vorzugsweise durch Fräsen, erfolgt.

Nach dem vollständigen Herstellen der Geometrie des jeweils ersten Teilvolumens des jeweiligen Produkts als ausgehärtetes Material ist das jeweilige Produkt einstückig mit der Basisplatte ausgebildet. Das jeweils zweite Teilvolumen des jeweiligen Produkts ist als ein Volumenbereich der Basisplatte ausgebildet, d.h. weitere Volumenbereiche der Basisplatte, die zu keinem der Produkte gehören, verbinden die Produkte miteinander. Um das jeweilige fertige Produkt zu erhalten, ist daher das jeweils zweite Teilvolumen des jeweiligen Produkts vorzugsweise von den nicht zum jeweiligen Produkt gehörenden Volumenbereichen der Basisplatte zu trennen.

Der Erfindung beruht dabei auch auf der Erkenntnis, dass die mit einem schichtweisen Aufbau zu erreichende Maßhaltigkeit von Produkten begrenzt ist, und beispielsweise von der Korngröße des verwendeten Materials, der Schichtdicke, und/oder der Verfahrenssteuerung abhängt. Durch spanende Bearbeitung sind hingegen wesentlich höhere Maßgenauigkeiten zu erzielen. Die Erfindung ermöglicht nun, das jeweils zweite Teilvolumen des jeweiligen Produkts freizustellen, indem der nicht zum Produkt gehörende Teil der Basisplatte durch spanende Bearbeitung vom jeweils zweiten Teilvolumen des jeweiligen Produkts entfernt wird. Dies kann vorzugsweise durch Fräsen erfolgen. Insbesondere in der Dentaltechnik wird hierfür beispielsweise die Hochgeschwindigkeitszerspanung (High Speed Cutting, HSC) bevorzugt, da sie sich insbesondere für Anwendungen eignet, bei denen hohe Anforderungen an Zerspan-Leistung und Oberflächenqualität gestellt werden, wie es in der Dentaltechnik der Fall ist. Die nicht das jeweils zweite Teilvolumen des jeweiligen Produkts bildenden Bereiche der Basisplatte können aber beispielsweise auch durch Erodieren, Drehen, Schleifen etc. entfernt werden.

Dias erfindungsgemäße Verfahren hat den Vorteil, dass das Freistellen des jeweils zweiten Teilvolumens der Produkte aus der Basisplatte mit einer erheblich höheren Maßgenauigkeit erfolgen kann als der schichtweise Aufbau des jeweils zweiten Teilvolumens der Produkte. Dabei ist es insbesondere bevorzugt, jeweils dasjenige Teilvolumen des jeweiligen Produkts als jeweils zweites Teilvolumen zu definieren, dessen Oberfläche oder Teil der Oberfläche einem besonders hohen Anspruch an Maßhaltigkeit, Konturtreue und Oberflächengüte gerecht werden muss. In der Dentaltechnik sind solche Oberflächen beispielsweise Kauflächen, reduzierte Kauflächen, Anschlussflächen zu einem Implantat und ähnliches. Vorzugsweise liegt die gesamte okklusale Innenkontur eines Dentalteils als Oberfläche des jeweils zweiten Teilvolumens innerhalb der Basisplatte, um eine Fertigung der Kontur mit hoher Maßhaltigkeit, Konturtreue und Oberflächengüte sicherzustellen.

Durch die erfindungsgemäße Verbindung von Fertigungsschritten zum schichtweisen Aufbau mit Fertigungsschritten der spanenden Bearbeitung zu einem dualen Fertigungsverfahren können die Vorteile des jeweiligen Verfahrens genutzt werden: Einerseits ermöglicht das Verfahren zum Herstellen eines Produkts mittels schichtweisen Aufbaus eine effiziente Herstellung von Produkten mit komplexer Geometrie, wie beispielsweise Produkte mit Hohlstrukturen, Hohlkörper oder Teilvolumina mit bestimmten Porositäten zur Gewichts- bzw. Festigkeitsoptimierung. Andererseits ermöglicht es die spanende Bearbeitung massive Produktanteile und Produktoberflächen mit hoher Maßhaltigkeit, Konturtreue und Oberflächengüte herzustellen.

Die Erfindung wird bevorzugt dadurch fortgebildet, dass ein oder mehrere Zahnersatzteile hergestellt werden und das jeweils zweite Teilvolumen eines oder mehrerer der Zahnersatzteile okklusale Produktabschnitte, insbesondere Kauflächen, umfasst.

In der Dentaltechnik sind häufig hochbelastbare, in den Abmessungen kleine Produkte mit komplexen Geometrien bei gleichzeitig sehr geringen Maßtoleranzen gefordert. Beispielsweise sind besonders okklusale Oberflächen von Dentalteilen, wie Kauflächen, reduzierte Kauflächen, etc. mit einem hohen Anspruch an Maßhaltigkeit, Konturtreue und Oberflächengüte zu fertigen.

Daher umfasst das jeweils zweite Teilvolumen des jeweiligen Zahnersatzteils bzw. Produkts vorzugsweise Produktabschnitte, die bei Anwendung der aus dem Stand der Technik bekannten Verfahren üblicherweise Abstützungen erforderlich machen. Solche Produktabschnitte können in der Dentaltechnik beispielsweise Käppchen, Kronen oder okklusale, d.h. zur Kaufläche hin gerichtete Produktabschnitte sein. Die erfindungsgemäße Fortbildung hat den Vorteil, dass in der durch schichtweisen Aufbau herzustellenden Geometrie des jeweils ersten Teilvolumens des jeweiligen Produkts keine abzustützenden Minima mehr vorhanden sind. Dies vereinfacht den Herstellungsprozess durch schichtweisen Aufbau des jeweils ersten Teilvolumens des jeweiligen Produkts und führt weiterhin zu Kosten- und Zeiteinsparungen, da sowohl das Material als auch das Herstellen und Wiederentfernen von Stützstrukturen, mit den eingangs genannten Nachteilen auch in Bezug auf die Produktqualität, entfallen kann. Für weiterhin auch im erfindungsgemäßen Verfahren notwendige Abstützungen bestimmter Produkte und Produktgeometrien, beispielsweise in der Herstellung von dentalen Hilfsteilen in Form von Brücken, können Stützalgorithmen und damit eine vollautomatische Abstützung angewendet werden.

Dabei hat sich gezeigt, dass mit dem erfindungsgemäßen Verfahren insbesondere qualitativ hochwertige Produkte mit relativ größeren Massivvolumenanteilen ausgebildet werden können. Dies wird erreicht, indem die Massivvolumenanteile in das jeweils zweite Teilvolumen verlagert werden. Die Massivvolumenanteile können dann in vorteilhafter Weise hergestellt werden, beispielsweise in einem Gussverfahren der Basisplatte, und dann nachfolgend durch spanende Bearbeitung aus der Basisplatteherausgetrennt werden.

Die Erfindung wird bevorzugt dadurch fortgebildet, dass die Referenzmarkierung an der Basisplatte ausgebildet wird. Dabei ist es besonders bevorzugt, dass die Referenzmarkierung als definierte Oberfläche der Basisplatte, definierter Umfang der Basisplatte und einer Kerbe im Umfang der Basisplatte ausgebildet wird.

Die Referenzmarkierung kann weiterhin beispielsweise als Einkerbung oder Erhebung der Basisplatte ausgebildet sein, die vorzugsweise mit einer entsprechenden Erhebung oder Einkerbung in einer Vorrichtung zum schichtweisen Aufbau und/oder einer Vorrichtung zum Freistellen eingreift, so dass die Lage der Basisplatte bezüglich ihrer dreidimensionalen Koordinaten eindeutig definiert ist. Die Abmessungen der Basisplatte selbst können in Zusammenwirken mit entsprechenden Vorrichtungsmerkmalen als Referenzmarkierung dienen. Insbesondere können drei Referenzpunkte oder -flächen bereitgestellt werden, so vorzugsweise eine Umfangsfläche der Basisplatte, eine Oberfläche der Basisplatte und eine Einkerbung in der Umfangsfläche der Basisplatte.

Alternativ oder zusätzlich kann die Erfindung dadurch fortgebildet werden, dass die Referenzmarkierung an einer durch schichtweisen Aufbau hergestellten Struktur ausgebildet wird. Vorzugsweise wird die Referenzmarkierung am jeweils ersten Teilvolumen eines oder mehrerer der Produkte ausgebildet, d.h. beim schichtweisen Aufbau an die jeweils ersten Teilvolumen eines oder mehrerer der Produkte angeformt, und nachträglich entfernt. Alternativ oder zusätzlich kann die Referenzmarkierung als von den zumindest zwei Produkten getrennte Struktur auf der Basisplatte ausgebildet, d.h. beim schichtweisen Aufbau an die Basisplatte angeformt, werden.

Die Erfindung wird weiterhin bevorzugt dadurch fortgebildet, dass die Referenzmarkierung zur Ausrichtung der aus Basisplatte und ersten Volumenbereichen gebildeten Einheit beim positionierten Spannen dient.

Die Erfindung wird weiterhin bevorzugt dadurch fortgebildet, dass die Referenzmarkierung als Spannstruktur beim positionierten Spannen der aus Basisplatte und ersten Volumenbereichen gebildeten Einheit dient. Dazu kann die Referenzmarkierung beispielsweise als würfelförmige Struktur an die jeweils ersten Teilvolumen eines oder mehrerer der Produkte und/oder an die Basisplatte angeformt sein, so dass die aus Basisplatte und ersten Volumenbereichen gebildeten Einheit anhand dieser würfelförmige Struktur positioniert gespannt werden kann.

Das erfindungsgemäße Verfahren wird vorzugsweise durch den Schritt fortgebildet: Erzeugen von auf das jeweils erste Teilvolumen der Produkte bezogenen Daten zum schichtweisen Aufbau des jeweils ersten Teilvolumens und/oder Erzeugen von auf das jeweils zweite Teilvolumen der Produkte bezogenen Daten zum Freistellen des jeweils zweiten Teilvolumens aus der Basisplatte.

Ein Verfahren zur Herstellung von Produkten mittels schichtweisen Aufbaus arbeitet mit geometrischen Daten der Produkte. Anhand dieser geometrischen Daten der Produkte werden die Bereiche in den einzelnen Schichten aushärtbaren Materials definiert, die selektiv auszuhärten sind, um die Geometrie der Produkte als ausgehärtetes Materials zu erstellen. Zur Durchführung des erfindungsgemäßen Verfahrens ist es bevorzugt, dass die Daten der herzustellenden Produkte so aufbereitet werden, dass zum jeweils ersten Teilvolumen des jeweiligen Produkts zugehörige Daten erzeugt werden, die die Geometrie des im schichtweisen Aufbau herzustellenden jeweils ersten Teilvolumens des jeweiligen Produkts repräsentieren. Dazu ist festzulegen, wo die Grenze zwischen jeweils erstem Teilvolumen und jeweils zweitem Teilvolumen des jeweiligen Produkts verlaufen soll. Hierzu sind unter anderem Kriterien wie erforderliche Maßhaltigkeit der Oberfläche und Verlauf der Kontur in Bezug auf erforderliche Abstützungen zu berücksichtigen. Vorzugsweise werden Produktteile mit hohen Anforderungen an Maßhaltigkeit, Konturtreue und Oberflächengüte und/oder einer Abstützungen erfordernden Geometrie als jeweils zweites Teilvolumen des jeweiligen Produkts definiert.

Der Teil des jeweiligen Produkts, der als jeweils zweites Teilvolumen innerhalb der Basisplatte ausgebildet werden soll, muss nicht durch schichtweisen Aufbau hergestellt werden. Lediglich für das jeweils erste Teilvolumen des jeweiligen Produkts sind Daten zum schichtweisen Aufbau zu erzeugen. Die Schnittstelle zwischen jeweils erstem und jeweils zweitem Teilvolumen des jeweiligen Produkts definiert jedoch die Bereiche der jeweils ersten aufzutragenden Schicht, die selektiv ausgehärtet werden sollen, da die Querschnittsflächen von jeweils erstem und jeweils zweitem Teilvolumen an der Schnittstelle einander im Wesentlichen entsprechen.

Vorzugsweise werden in der Datenaufbereitung zum jeweils zweiten Teilvolumen der Produkte zugehörige Daten erzeugt, die definieren, welche Volumenbereiche der Basisplatte im Verfahrensschritt des Freistellens des jeweils zweiten Teilvolumens der Produkte aus der Basisplatte zu entfernen sind bzw. welche Geometrie des jeweils zweiten Teilvolumens der Produkte durch Entfernen von Basisplattenmaterial freigestellt werden soll. Vorzugsweise werden die Daten in einer solchen Datenform erzeugt, so dass sie gegebenenfalls an eine weitere Vorrichtung, beispielsweise eine CNC-Fräse, übergeben werden können, die das Freistellen des jeweils zweiten Teilvolumens der Produkte aus der Basisplatte vornimmt.

Ein weiterer Aspekt der Erfindung betrifft eine Vorrichtung zum Herstellen von Produkten durch schichtweisen Aufbau, umfassend Mittel zum Auftragen einer Schicht eines aushärtbaren Materials auf eine Basisplatte und Mittel zum selektiven Aushärten von vorbestimmten Bereichen der aufgetragenen Schicht anhand geometrischer Daten der Produkte, gekennzeichnet durch Mittel zum Erzeugen von auf ein jeweils erstes Teilvolumen der Produkte bezogenen Daten zum schichtweisen Aufbau des jeweils ersten Teilvolumens und Mittel zum Erzeugen von auf ein jeweils zweites Teilvolumen der Produkte bezogenen Daten zum Freistellen des jeweils zweiten Teilvolumens aus der Basisplatte.

Die erfindungsgemäße Vorrichtung zum Herstellen von Produkten durch schichtweisen Aufbau unterscheidet sich von bekannten Vorrichtungen zum Herstellen von Produkten durch schichtweisen Aufbau dadurch, dass die Vorrichtung ausgebildet ist, die die Produkte repräsentierenden Daten derart aufzubereiten, dass zum jeweils ersten Teilvolumen der Produkte zugehörige Daten erzeugt werden können, die den schichtweisen Aufbau entsprechend der geometrischen Daten des jeweils ersten Teilvolumens der Produkte ermöglichen. Alternativ oder zusätzlich ist die Vorrichtung ausgebildet, um die Daten der herzustellenden Produkte derart aufzubereiten, dass zum jeweils zweiten Teilvolumen der Produkte gehörende Daten erzeugt werden, die es ermöglichen, das jeweils zweite Teilvolumen der Produkte aus der Basisplatte freizustellen. Vorzugsweise liegen die zum Freistellen des jeweils zweiten Teilvolumens aus der Basisplatte erforderlichen Daten in einer Form vor, die eine Übertragung dieser Daten auf eine Vorrichtung zum Freistellen des jeweils zweiten Teilvolumens aus der Basisplatte ermöglichen beispielsweise eine CNC-Fräsmaschine. Die Vorrichtung wird vorzugsweise derart fortgebildet, dass sie mit Bezug auf das Verfahren beschriebenen bevorzugten Fortbildungen des Verfahrens ausführen kann. Auf die entsprechenden, zuvor beschriebenen Merkmale und Vorteile wird verwiesen.

Eine Vorrichtungsanordnung zum Herstellen von Produkten durch teilweise schichtweisen Aufbau ist auch offenbart, umfassend eine erste Vorrichtung zum schichtweisen Aufbau eines jeweils ersten Teilvolumens der Produkte, umfassend Mittel zum Auftragen einer Schicht eines aushärtbaren Materials auf eine Basisplatte und Mittel zum selektiven Aushärten von vorbestimmten Bereichen der aufgetragenen Schicht anhand geometrischer Daten der Produkte, gekennzeichnet durch eine zweite Vorrichtung zum Freistellen eines jeweils zweiten Teilvolumens der Produkte aus der Basisplatte.

Die Vorrichtungsanordnung besteht aus einer ersten Vorrichtung zum schichtweisen Aufbau eines jeweils ersten Teilvolumens der Produkte und einer zweiten Vorrichtung zum Freistellen eines jeweils zweiten Teilvolumens der Produkte aus der Basisplatte, wobei vorzugsweise die herzustellenden Produkte zunächst durch die erste Vorrichtung zum schichtweisen Aufbau bearbeitet und anschließend durch die zweite Vorrichtung zum Freistellen des jeweils zweiten Teilvolumens der Produkte bearbeitet wird. Die erfindungsgemäße Vorrichtungsanordnung ist vorzugsweise derart fortgebildet, dass sie zur Durchführung der oben beschriebenen Verfahrensschritte und ihre Fortbildungen geeignet ist. Auf die entsprechenden, zuvor beschriebenen Verfahrensmerkmale und ihre Vorteile wird verwiesen.

Ein weiterer Aspekt der Erfindung betrifft die Verwendung einer Vorrichtung gemäß dem Anspruch 11 zum schichtweisen Aufbau von Produkten zur Durchführung eines Verfahrens nach einem der Ansprüche 1 bis 10.

Die Erfindung wird im Folgenden beispielhaft anhand der beiliegenden Figur beschrieben.

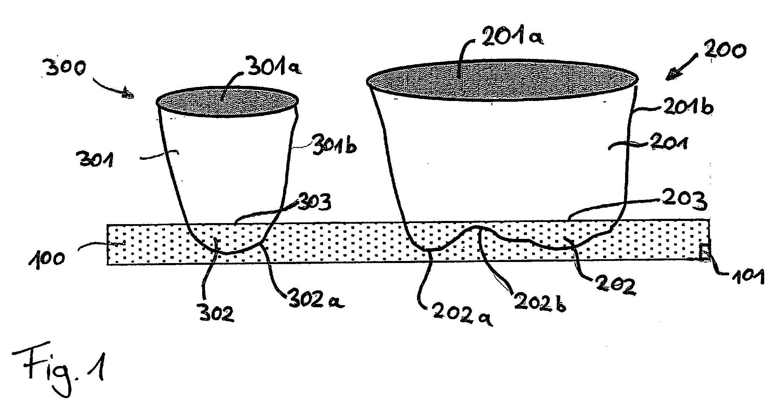

Figur 1 zeigt zwei mit dem erfindungsgemäßen Verfahren teilweise bereits hergestellte, teilweise noch herzustellende Produkte 200, 300, die auf einer Basisplatte 100 aufgebaut sind. Erste Teilvolumina der Produkte 201, 301 sind durch schichtweisen Aufbau auf der Basisplatte 100 hergestellt worden. Auf die zunächst bereitgestellte Basisplatte 100 wurde dazu zunächst eine erste Schicht eines aushärtbaren Materials aufgetragen. Vorbestimmte Bereichen der aufgetragenen ersten Schicht wurden anhand geometrischer Daten des Produkts selektiv ausgehärtet. Weitere Schichten wurden auf die erste Schicht aufgetragen und ausgehärtet, bis die gewünschte und in Fig. 1 dargestellte Geometrie der ersten Teilvolumina der Produkte 201, 301 erzeugt worden war. Schließlich wurde das nicht ausgehärtete Material aller Schichten entfernt.

Zweite Teilvolumina 202, 302 sind als Volumenbereiche der Basisplatte 100 ausgebildet. Die zweiten Teilvolumina 202, 302 sind bei den in Figur 1 gezeigten Produkten 200, 300 noch nicht von der Basisplatte 100 freigestellt. Dies erfolgt in einem weiteren Bearbeitungsschritt durch spanende Bearbeitung, vorzugsweise CNC-Fräsen.

Die Basisplatte 100 weist eine Einkerbung 101 auf, die zusammen mit der Oberfläche und dem Umfang der Basisplatte als Referenzmarke dient, um die Basisplatte für den Schritt des CNC-Fräsens positioniert zu spannen.

Die Basisplatte 100 besteht aus dem gleichen Material wie die ausgehärteten ersten Teilvolumina 201, 301. Die Übergangs-Querschnittflächen 203, 303 zwischen dem jeweils ersten Teilvolumina 201, 301 und dem entsprechend zweiten Teilvolumina 202, 302 entsprechen in ihrer Art (jedoch meist nicht genau in ihren Abmessungen) daher den in Figur 1 nicht dargestellten weiteren Querschnittflächen zwischen den einzelnen ausgehärteten Schichten der durch schichtweisen Aufbau hergestellten ersten Teilvolumina 201, 301. Die Abmessungen der einzelnen ausgehärteten Schichten entsprechen der jeweiligen Produktgeometrie.

Die Produkte 200, 300 weisen Konturen 201b, 301 b und in der Darstellung von Figur 1 obere Oberflächen 201a, 301a auf, die mit den bekannten Verfahren zum schichtweisen Aufbau erreichbare Anforderungen an Maßhaltigkeit, Konturtreue und Oberflächengüte aufweisen. Die zweiten Teilvolumina 202, 302 weisen Konturen 202a, 302a auf, die höhere Anforderungen an Maßhaltigkeit, Konturtreue und Oberflächengüte zu erfüllen haben. Vorzugsweise handelt es sich bei den Konturen 202a, 302a um okklusale Konturen mit einem Massivmaterialanteil, wie hier in Figur 1 dargestellt, oder beispielsweise auch um Konturen einer Anschlussfläche für ein Implantat. Diese höheren Anforderungen an Maßhaltigkeit, Konturtreue und Oberflächengüte können durch die nachfolgende Freistellung der zweiten Teilvolumina 202, 302, insbesondere durch spanende Bearbeitung wie beispielsweise Fräsen der Konturen 202a, 302a, erfüllt werden.

Das Produkt 200 weist zudem eine okklusale Kontur auf, die auch eine Vertiefung 202b aufweist. Wie in Figur 1 dargestellt, liegt diese Vertiefung 202b ebenfalls innerhalb der Basisplatte 100, so dass in diesem Bereich keine Abstützungen erforderlich sind. Dies reduziert sowohl die für die Herstellung erforderlichen Kosten als auch die Herstellungszeit und kann die Produktqualität verbessern.

Ein erfindungsgemäß bevorzugtes beispielhaftes Herstellungsverfahren läuft wie folgt ab:
Zunächst wird eine Basisplatte 100 bereitgestellt. Dies erfolgt beispielsweise durch Gießen von geschmolzenem Material und anschließendem Aushärten und ggf. einer weiteren Nachbearbeitung, wenn eine größere Basisplatte beispielsweise in mehrere kleine Basisplatten unterteilt werden soll. Anschließend wird die Basisplatte 100 in einer ersten Vorrichtung zum Herstellen eines Produkts 200, 300 mittels zumindest teilweise schichtweisen Aufbaus eingespannt. Dazu weist die Basisplatte 100 eine Einkerbung auf, die zusammen mit der Umfangs- und der Oberfläche der Basisplatte 100 Referenzflächen bildet und die dreidimensionale Lagedefinition der Basisplatte 100 ermöglicht.

Nach der Festlegung, wo die Grenze zwischen ersten und zweiten Teilvolumina der Produkte 200, 300 verlaufen soll, erzeugen Datenaufbereitungsmittel der ersten Vorrichtung auf die ersten Teilvolumina 201, 301 der Produkte 200, 300 bezogene Daten zum schichtweisen Aufbau der ersten Teilvolumina 201, 301. Vorzugsweise werden die Produktbereiche als zweite Teilvolumina 202, 302 in die Basisplatte 100 gelegt, deren Oberflächen 202a, 302a besondere Anforderungen erfüllen müssen und die einen größeren Massivvolumenanteil aufweisen.

Weiterhin erzeugen die Datenaufbereitungsmittel auf die zweiten Teilvolumina 202, 302 der Produkte 200, 300 bezogene Daten zum Freistellen der zweiten Teilvolumina 202, 302 aus der Basisplatte 100. Dieser Schritt kann unabhängig vom Erzeugen der auf die ersten Teilvolumina 201, 301 bezogenen Daten zum schichtweisen Aufbau erfolgen. Vorzugsweise erfolgt die Erzeugung der auf die ersten Teilvolumina 201, 301 bezogenen Daten zum schichtweisen Aufbau und die Erzeugung der auf die zweiten Teilvolumina 202, 302 bezogene Daten zum Freistellen der zweiten Teilvolumina 202, 302 aus der Basisplatte 100 gemeinsam oder direkt aufeinander folgend.

Mittels der ersten Vorrichtung wird nun eine erste Schicht eines aushärtbaren Materials auf die Basisplatte 100 aufgebracht. Anhand der geometrischen Daten des Produkts 200, 300 werden dann vorbestimmte Bereiche der aufgetragenen Schicht selektiv ausgehärtet. Die ausgehärtete Schicht und die Basisplatte 100 bestehen aus dem gleichen Material.

Anschließend wird eine weitere Schicht des aushärtbaren Materials auf die darunter liegende, bereits ausgehärtete erste Schicht aufgebracht und wiederum werden vorbestimmte Bereichen der neu aufgetragenen Schicht anhand der geometrischen Daten des Produkts 200, 300 selektiv ausgehärtet. Auf diese nun ausgehärtete Schicht wird wieder eine weitere Schicht des aushärtbaren Materials aufgebracht und wiederum werden vorbestimmte Bereichen dieser neu aufgetragenen Schicht anhand der geometrischen Daten des Produkts 200, 300 selektiv ausgehärtet. In der gleichen Weise werden so viele Schichten des aushärtbaren Materials aufgebracht, die erforderlich sind, um die ersten Teilvolumina 201, 301 vollständig herzustellen, d.h. die Geometrie der ersten Teilvolumina 201, 301 aus ausgehärtetem Material durch schichtweisen Aufbau auszubilden.

Anschließend wird die Basisplatte 100 mit den mit ihr einstückig verbundenen ersten Teilvolumina 201, 301 aus der Vorrichtung zum Herstellen eines Produkts 200, 300 mittels zumindest teilweise schichtweisen Aufbaus entnommen und einer zweiten Vorrichtung zum Freistellen der zweiten Teilvolumina 202, 302 des Produkts aus der Basisplatte 100 zugeführt. Die zweite Vorrichtung ist beispielsweise eine CNC-Fräse.

Die Basisplatte 100 mit den mit ihr einstückig verbundenen ersten Teilvolumina 201, 301 wird in der zweiten Vorrichtung eingespannt. Zur dreidimensionalen Lagedefinition der Basisplatte 100 werden wieder die genannten Referenzflächen der Basisplatte 100 genutzt.

Weiterhin werden die erzeugten, auf die zweiten Teilvolumina 202, 302 bezogenen Daten zum Freistellen der zweiten Teilvolumina 202, 302 aus der Basisplatte 100 an die zweite Vorrichtung übergeben.

Die zweite Vorrichtung entfernt nun auf Basis dieser Daten und anhand der Lagedefinition der Basisplatte 100 durch die Referenzflächen die nicht zu den Produkten 200, 300 gehörenden Bereiche der Basisplatte 100 und stellt somit die zweiten Teilvolumina 202, 302 der Produkte 200, 300 aus der Basisplatte 100 durch spanende Bearbeitung frei.

## Patentansprüche

1. Verfahren zum Herstellen von Produkten (200, 300) mittels zumindest teilweise schichtweisen Aufbaus, insbesondere durch selektives Laserschmelzen, umfassend die Schritte:
(a) Bereitstellen einer Basisplatte (100) aus dem gleichen Material wie das Produkt,
(b) Auftragen einer Schicht eines aushärtbaren Materials,
(c) selektives Aushärten von vorbestimmten Bereichen der aufgetragenen Schicht anhand geometrischer Daten von zumindest zwei getrennten Produkten,
(d) Wiederholen der Schritte (b) und (c) bis die Geometrie eines jeweils ersten Teilvolumens (201, 301) des jeweiligen Produkts als ausgehärtetes Material erstellt wurde,
(e) Entfernen des nicht ausgehärteten Materials, wobei ein jeweils zweites Teilvolumen (202, 302) jedes Produkts als ein Volumenbereich der Basisplatte ausgebildet wird,
umfassend weiterhin die Schritte:
- Bereitstellen einer Referenzmarkierung,
- Positioniertes Spannen der aus Basisplatte und ersten Volumenbereichen gebildeten Einheit mittels der Referenzmarkierung,
- Freistellen des jeweils zweiten Teilvolumens (202, 302) des Produkts aus der Basisplatte (100), vorzugsweise durch spanende Bearbeitung, insbesondere CNC-Fräsen.

2. Verfahren nach Anspruch 1,
**dadurch gekennzeichnet, dass** ein oder mehrere Zahnersatzteile hergestellt werden und das jeweils zweite Teilvolumen eines oder mehrerer der Zahnersatzteile okklusale Produktabschnitte, insbesondere Kauflächen, umfasst.

3. Verfahren nach einem der Ansprüche 1 oder 2,
**dadurch gekennzeichnet, dass** die Referenzmarkierung an der Basisplatte ausgebildet wird.

4. Verfahren nach dem vorhergehenden Anspruch,
**dadurch gekennzeichnet, dass** die Referenzmarkierung als definierte Oberfläche der Basisplatte, definierter Umfang der Basisplatte und einer Kerbe im Umfang der Basisplatte ausgebildet wird.

5. Verfahren nach einem der Ansprüche 1 oder 2,
**dadurch gekennzeichnet, dass** die Referenzmarkierung an einer durch schichtweisen Aufbau hergestellten Struktur ausgebildet wird.

6. Verfahren nach dem vorhergehenden Anspruch,
**dadurch gekennzeichnet, dass** die Referenzmarkierung am jeweils ersten Teilvolumen eines oder mehrerer der Produkte ausgebildet wird und nachträglich entfernt wird.

7. Verfahren nach Anspruch 5,
**dadurch gekennzeichnet, dass** die Referenzmarkierung als von den zumindest zwei Produkten getrennte Struktur auf der Basisplatte ausgebildet wird.

8. Verfahren nach einem der drei vorhergehenden Ansprüche,
**dadurch gekennzeichnet, dass** die Referenzmarkierung zur Ausrichtung der aus Basisplatte und ersten Volumenbereichen gebildeten Einheit beim positionierten Spannen dient.

9. Verfahren nach einem der vorhergehenden Ansprüche 5 bis 8,
**dadurch gekennzeichnet, dass** die Referenzmarkierung als Spannstruktur beim positionierten Spannen der aus Basisplatte und ersten Volumenbereichen gebildeten Einheit dient.

10. Verfahren nach einem der vorhergehenden Ansprüche,
**gekennzeichnet durch** den Schritt:
- Erzeugen von auf das jeweils erste Teilvolumen (201, 301) der Produkte bezogenen Daten zum schichtweisen Aufbau des jeweils ersten Teilvolumens und/oder Erzeugen von auf das jeweils zweite (202, 302) Teilvolumen der Produkte bezogenen Daten zum Freistellen des jeweils zweiten Teilvolumens aus der Basisplatte (100).

11. Vorrichtung zum Herstellen von Produkten durch schichtweisen Aufbau, umfassend
- Mittel zum Auftragen einer Schicht eines aushärtbaren Materials auf eine Basisplatte (100) und
- Mittel zum selektiven Aushärten von vorbestimmten Bereichen der aufgetragenen Schicht anhand geometrischer Daten der Produkte, Mittel zum Erzeugen von auf ein jeweils erstes Teilvolumen (201, 301) der Produkte bezogenen Daten zum schichtweisen Aufbau des jeweils ersten Teilvolumens **gekennzeichnet durch** Mittel zum Erzeugen von auf ein jeweils zweites Teilvolumen (202, 302) der Produkte bezogenen Daten zum Freistellen des jeweils zweiten Teilvolumens aus der Basisplatte.

12. Verwendung einer Vorrichtung nach dem Anspruch 11 zum schichtweisen Aufbau von Produkten zur Durchführung eines Verfahrens nach einem der vorhergehenden Ansprüche 1 bis 10.

## Claims

1. Method for manufacturing products (200, 300) by means of at least partially layer-by-layer construction, in particular by selective laser melting, comprising the steps:
(a) providing a base plate (100) made of the same material as the product,
(b) applying a layer of a curable material,
(c) selectively curing predetermined zones of the applied layer on the basis of geometrical data of at least two separate products,
(d) repeating steps (b) and (c) until the geometry of a respective first partial volume (201, 301) of the respective product has been created as cured material,
(e) removing the uncured material, wherein a respective second partial volume (202, 302) of each product is formed as a volume zone of the base plate,
further comprising the steps:
- providing a reference marking,
- clamping into position, by means of the reference marking, the unit formed of the base plate and the first volume zone,
- releasing the respective second partial volume (202, 302) of the product from the base plate (100), preferably by machining, in particular CNC milling.

2. Method according to claim 1,
**characterized in that** one or more tooth replacement parts are manufactured and the respective second partial volume of one or more of the tooth replacement parts comprises occlusal product sections, in particular chewing surfaces.

3. Method according to any one of claims 1 or 2,
**characterized in that** the reference marking is formed on the base plate.

4. Method according to the preceding claim,
**characterized in that** the reference marking is formed as a defined surface of the base plate, as a defined periphery of the base plate and as a notch in the periphery of the base plate.

5. Method according to any one of claims 1 or 2,
**characterized in that** the reference marking is formed on a structure manufactured by layer-by-layer construction.

6. Method according to the preceding claim,
**characterized in that** the reference marking is formed on the respective first partial volume of one or more of the products and is subsequently removed.

7. Method according to claim 5,
**characterized in that** the reference marking is formed as a structure on the base plate which is separate from the at least two products.

8. Method according to any one of the three preceding claims,
**characterized in that** the reference marking serves for orienting the unit formed of the base plate and the first volume zones when clamping into position.

9. Method according to any one of the preceding claims 5 to 8,
**characterized in that** the reference marking serves as a clamping structure when clamping into position the unit formed of the base plate and the first volume zones.

10. Method according to any one of the preceding claims,
**characterized by** the step:
- generating data relating to the respective first partial volume (201, 301) of the products for the layer-by-layer construction of the respective first partial volume, and/or generating data relating to the respective second (202, 302) partial volume of the products for releasing the respective second partial volume from the base plate (100).

11. Device for manufacturing products by layer-by-layer construction,
comprising
- means for applying a layer of a curable material to a base plate (100) and
- means for selectively curing predetermined zones of the applied layer on the basis of geometrical data of the products,
- means for generating data relating to a respective first partial volume (201, 301) of the products for the layer-by-layer construction of the respective first partial volume,
**characterized by** means for generating data relating to a respective second partial volume (202, 302) of the products for releasing the respective second partial volume from the base plate.

12. Use of a device according to claim 11 for the layer-by-layer construction of products for carrying out a method according to any one of the preceding claims 1 to 10.

## Revendications

1. Procédé servant à fabriquer des produits (200, 300) au moyen d'une construction au moins en partie par couches, en particulier par une fusion sélective par laser, comprenant les étapes suivantes :
a) la mise à disposition d'une plaque de base (100) composée du même matériau que le produit,
b) l'application d'une couche d'un matériau durcissable,
c) le durcissement sélectif de zones prédéfinies de la couche appliquée à l'aide de données géométriques d'au moins deux produits séparés,
d) la répétition des étapes (b) et (c), jusqu'à ce que la forme géométrique d'un premier volume partiel (201, 301) respectif du produit respectif soit produite sous la forme d'un matériau durci,
e) le retrait du matériau non durci,
dans lequel un deuxième volume partiel (202, 302) respectif de chaque produit est réalisé sous la forme d'une zone de volume de la plaque de base,
comprenant par ailleurs les étapes suivantes :
- la mise à disposition d'un marquage de référence,
- le serrage en position de l'unité formée à partir de la plaque de base et des premières zones de volume au moyen du marquage de référence,
- le dégagement du deuxième volume partiel (202, 302) respectif du produit de la plaque de base (100), de préférence par un usinage par enlèvement de copeaux, en particulier par un fraisage CNC (à commande numérique par calculateur).

2. Procédé selon la revendication 1,
**caractérisé en ce qu'**une ou plusieurs prothèses dentaires sont fabriquées, et **en ce que** le deuxième volume partiel respectif d'une ou de plusieurs prothèses dentaires comprend des sections de produit occlusales, en particulier des surfaces de mastication.

3. Procédé selon l'une quelconque des revendications 1 ou 2,
**caractérisé en ce que** le marquage de référence est réalisé au niveau de la plaque de base.

4. Procédé selon la revendication précédente,
**caractérisé en ce que** le marquage de référence est réalisé sous la forme d'une surface définie de la plaque de base, sous la forme d'une circonférence définie de la plaque de base et d'une encoche sur la périphérie de la plaque de base.

5. Procédé selon l'une quelconque des revendications 1 ou 2,
**caractérisé en ce que** le marquage de référence est réalisé au niveau d'une structure fabriquée par une construction par couches.

6. Procédé selon la revendication précédente,
**caractérisé en ce que** le marquage de référence est réalisé au niveau des premiers volumes partiels respectifs d'un ou de plusieurs des produits et est retiré ultérieurement.

7. Procédé selon la revendication 5,
**caractérisé en ce que** le marquage de référence est réalisé sur la plaque de base sous la forme d'une structure séparée des deux produits ou plus.

8. Procédé selon l'une quelconque des trois revendications précédentes,
**caractérisé en ce que** le marquage de référence sert à orienter l'unité formée à partir de la plaque de base et des premières zones de volume lors du serrage en position.

9. Procédé selon l'une quelconque des revendications précédentes 5 à 8,
**caractérisé en ce que** le marquage de référence fait office de structure de serrage lors du serrage en position de l'unité formée à partir de la plaque de base et des premières zones de volume.

10. Procédé selon l'une quelconque des revendications précédentes,
**caractérisé par** l'étape suivante :
- la production de données en lien avec le premier volume partiel (201, 301) respectif des produits servant à la construction par couches du premier volume partiel respectif et/ou la production de données en lien avec le deuxième volume partiel (202, 302) respectif des produits servant à dégager le deuxième volume partiel respectif de la plaque de base (100).

11. Dispositif servant à fabriquer des produits par une construction par couches, comprenant
- des moyens servant à appliquer une couche d'un matériau durcissable sur une plaque de base (100) et
- des moyens servant à durcir de manière sélective des zones prédéfinies de la couche appliquée à l'aide de données géométriques des produits,
- des moyens servant à produire des données en lien avec le premier volume partiel (201, 301) respectif des produits servant à la construction par couches du premier volume partiel respectif, **caractérisé par** des moyens servant à produire des données en lien avec un deuxième volume partiel (202, 302) respectif des produits servant à dégager le deuxième volume respectif de la plaque de base.

12. Utilisation d'un dispositif selon la revendication 11 servant à la construction par couches de produits, aux fins de la mise en oeuvre d'un procédé selon l'une quelconque des revendications précédentes 1 à 10.
